# EUROPEAN PATENT APPLICATION

(11) **EP 4 832 634 A1**
(43) Date of publication of application: **28.10.2026**
(21) Application number: 25747979.0
(22) Date of filing: 26.01.2025
(51) Int. Cl.: H04W 72/23

(54) **INFORMATION CONFIGURATION METHOD, APPARATUS, TERMINAL DEVICE AND NETWORK DEVICE**

(30) Priority: 01.02.2024 CN 202410145331
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Yan, Beijing 100053 (CN); WANG, Fei, Beijing 100053 (CN); CAO, Yuhua, Beijing 100053 (CN); SHEN, Xiaodong, Beijing 100053 (CN); HU, Nan, Beijing 100053 (CN)
(74) Representative: Murgitroyd & Company
(86) International application number: PCT/CN2025/075351
(87) International publication number: WO 2025/162415

(57) **Abstract**

The present disclosure relates to the field of wireless communication technologies, and in particular provides an information configuration method, apparatus, user equipment and network device. By determining an association relationship between at least one channel and a channel state information report based on configuration information, or determining an association relationship between at least one channel and a resource based on configuration information, occupation of channel resources during beam management is effectively reduced.

## Description

### CROSS-REFERENCE TO RELATED APPLICATION

The present application is filed based on and claims the priority of Chinese Application No. 202410145331.8, filed on February 1, 2024, the disclosure of which are incorporated in their entireties by reference herein.

### TECHNICAL FIELD

The present disclosure relates to the field of communication technologies, and in particular, to an information configuration method, apparatus, user equipment, and network device.

### BACKGROUND

In typical beam management procedures, in order to obtain an optional beam, a network device needs to frequently configure and activate periodic or semi-persistent beam reports, or frequently trigger aperiodic beam reports. However, such beam management approach results in large uplink reporting overhead and control signaling overhead.

Meanwhile, in order to reduce the above overhead, beam reports with a lower frequency may be configured, but this approach prevents the network from always obtaining the optional beam because the beam reports may have become outdated, thereby resulting in performance degradation.

### SUMMARY

The present disclosure is proposed in view of the above problems. The present disclosure provides an information configuration method, apparatus, terminal device, and network device.

According to a first aspect of the present disclosure, an information configuration method is provided and applied to a user equipment. The method includes:
receiving configuration information transmitted by a network device;
determining, based on the configuration information, an association relationship between at least one first channel and a first channel state information report; or determining, based on the configuration information, an association relationship between at least one first channel and a first resource.

Further, the configuration information is channel state information report configuration information, the channel state information report configuration information indicates a first channel and a second channel for transmitting a first channel state information report.

Further, the channel state information report configuration information further indicates at least one report quantity, and/or at least one number of reported reference signals.

Further, the first channel is associated with a first report quantity and a first number of reported reference signals, and the second channel is associated with a second report quantity and a second number of reported reference signals.

Further, the configuration information is first channel configuration information, the first channel configuration information indicates an association relationship between the first channel and the first channel state information report.

Further, the association relationship includes that the first channel is associated with a first channel state information report corresponding to at least one L1-RSRP or at least one L1-SINR report, or associated with a corresponding channel state information reference signal CSI-RS or synchronization signal block SSB resource.

Further, the first channel configuration information further indicates: a third report quantity and a third number of reported reference signals.

Further, the third report quantity includes at least one of the following:
a transmission configuration indicator state identifier TCI state ID;
and/or a reference signal resource indicator CRI;
and/or a synchronization signal block identifier SSBID;
and/or L1-RSRP or L1-SINR;
or no candidate RS.

Further, the configuration information is second channel configuration information, the second channel configuration information indicates an association relationship between the first channel and a first channel state information resource configuration, or a channel state information reference signal resource set, or an SSB set, or a channel state information reference signal resource, or an SSB.

Further, the second channel configuration information further indicates a fourth report quantity and a fourth number of reported reference signals.

Further, the fourth report quantity includes at least one of the following:
a transmission configuration indicator state identifier TCI state ID;
and/or a reference signal resource indicator CRI;
and/or a synchronization signal block identifier SSBID;
and/or L1-RSRP or L1-SINR;
or no candidate RS.

Further, the method further includes:
transmitting, via the first channel, the first channel state information report to the network device when the channel state satisfies a first predetermined condition.

Further, the first predetermined condition includes at least one of the following:
channel quality of a CSI-RS or SSB is less than a threshold value;
or channel quality of a reference signal of a quasi co-location QCL configured in a TCI state is less than a threshold value;
or an optional CRI or SSBID is different from a most recent report.

According to a second aspect, an information configuration method is provided and applied to a network device. The method includes:
transmitting configuration information to a user equipment; wherein the configuration information is used to determine an association relationship between at least one first channel and a first channel state information report, or determine an association relationship between at least one first channel and a first resource.

Further, the configuration information is channel state information report configuration information, the channel state information report configuration information indicates a first channel and a second channel for transmitting a first channel state information report.

Further, the channel state information report configuration information further indicates at least one report quantity, and/or at least one number of reported reference signals.

Further, the first channel is associated with a first report quantity and a first number of reported reference signals, and the second channel is associated with a second report quantity and a second number of reported reference signals.

Further, the configuration information is first channel configuration information, the first channel configuration information indicates an association relationship between the first channel and the first channel state information report.

Further, the association relationship includes that the first channel is associated with a first channel state information report corresponding to at least one L1-RSRP or at least one L1-SINR report, or associated with a corresponding channel state information reference signal CSI-RS or synchronization signal block SSB resource.

Further, the first channel configuration information further indicates: a third report quantity and a third number of reported reference signals.

Further, the third report quantity includes at least one of the following:
a transmission configuration indicator state identifier TCI state ID;
and/or a reference signal resource indicator CRI;
and/or a synchronization signal block identifier SSBID;
and/or L1-RSRP or L1-SINR;
or no candidate RS.

Further, the configuration information is second channel configuration information, the second channel configuration information indicates an association relationship between the first channel and a first channel state information resource configuration, or a channel state information reference signal resource set, or an SSB set, or a channel state information reference signal resource, or an SSB.

Further, the second channel configuration information further indicates a fourth report quantity and a fourth number of reported reference signals.

Further, the fourth report quantity includes at least one of the following:
a transmission configuration indicator state identifier TCI state ID;
and/or a reference signal resource indicator CRI;
and/or a synchronization signal block identifier SSBID;
and/or L1-RSRP or L1-SINR;
or no candidate RS.

Further, the method further includes:
receiving, via the first channel, the first channel state information report transmitted by the user equipment, when the channel state satisfies a first predetermined condition.

Further, the first predetermined condition includes at least one of the following:
channel quality of a CSI-RS or SSB is less than a threshold value;
or channel quality of a reference signal of a quasi co-location QCL configured in a TCI state is less than a threshold value;
or an optional CRI or SSBID is different from a most recent report.

According to a third aspect, an information configuration apparatus is applied and applied to a user equipment. The apparatus includes:
a receiving module used to receive configuration information transmitted by a network device;
a determining module used to determine, based on the configuration information, an association relationship between at least one first channel and a first channel state information report, or determine, based on the configuration information, an association relationship between at least one first channel and a first resource.

According to a fourth aspect, an information configuration apparatus is provided and applied to a network device. The apparatus includes:
a transmission module used to transmit configuration information to a user equipment; wherein the configuration information is used to determine an association relationship between at least one first channel and a first channel state information report, or the configuration information is used to determine an association relationship between at least one first channel and a first resource.

According to a fifth aspect, a user equipment is provided and includes:
a communication interface used to perform wireless communication with a network device;
a memory used to store a computer-readable instruction; and
a processor used to execute the computer-readable instruction to cause the user equipment to perform the above information configuration method.

According to a sixth aspect, a network device is provided and includes:
a communication interface used to perform wireless communication with a user equipment;
a memory used to store a computer-readable instruction; and
a processor used to execute the computer-readable instruction to cause the network device to perform the above information configuration method.

According to a seventh aspect, a computer program product is provided and includes a computer program; wherein the computer program, when executed by a processor, performs the above information configuration method.

As will be described in detail below, according to the information configuration method of the embodiments of the present disclosure, by determining, based on configuration information, an association relationship between at least one channel and a channel state information report, or determining, based on configuration information, an association relationship between at least one channel and a resource, occupation of channel resources during beam management is effectively reduced.

### BRIEF DESCRIPTION OF THE DRAWINGS

By describing embodiments of the present disclosure in more detail with reference to the accompanying drawings, the above and other objects, features, and advantages of the present disclosure will become more apparent. The accompanying drawings are used to provide a further understanding of the embodiments of the present disclosure and constitute a part of the specification. Together with the embodiments of the present disclosure, they serve to explain the present disclosure and do not limit the present disclosure. In the drawings, the same reference numerals generally represent the same components or steps.
FIG. 1 is a schematic diagram illustrating an application scenario of an information configuration method according to an embodiment of the present disclosure;
FIG. 2 is a flowchart of an information configuration method according to an embodiment of the present disclosure;
FIG. 3 is another flowchart of an information configuration method according to an embodiment of the present disclosure;
FIG. 4 is a schematic diagram of an information configuration apparatus according to an embodiment of the present disclosure;
FIG. 5 is another schematic diagram of an information configuration apparatus according to an embodiment of the present disclosure;
FIG. 6 is a hardware block diagram of a user equipment according to an embodiment of the present disclosure;
FIG. 7 is a hardware block diagram of a network device according to an embodiment of the present disclosure; and
FIG. 8 is a schematic diagram of a computer program product according to an embodiment of the present disclosure.

### DETAILED DESCRIPTION

In order to make objectives, technical solutions and advantages of the present disclosure more apparent, exemplary embodiments of the present disclosure will be described in detail hereinafter with reference to the accompanying drawings. Obviously, the described embodiments are only a part of the embodiments of the present disclosure, rather than all of the embodiments of the present disclosure. It is to be understood that the present disclosure is not limited to the exemplary embodiments described herein.

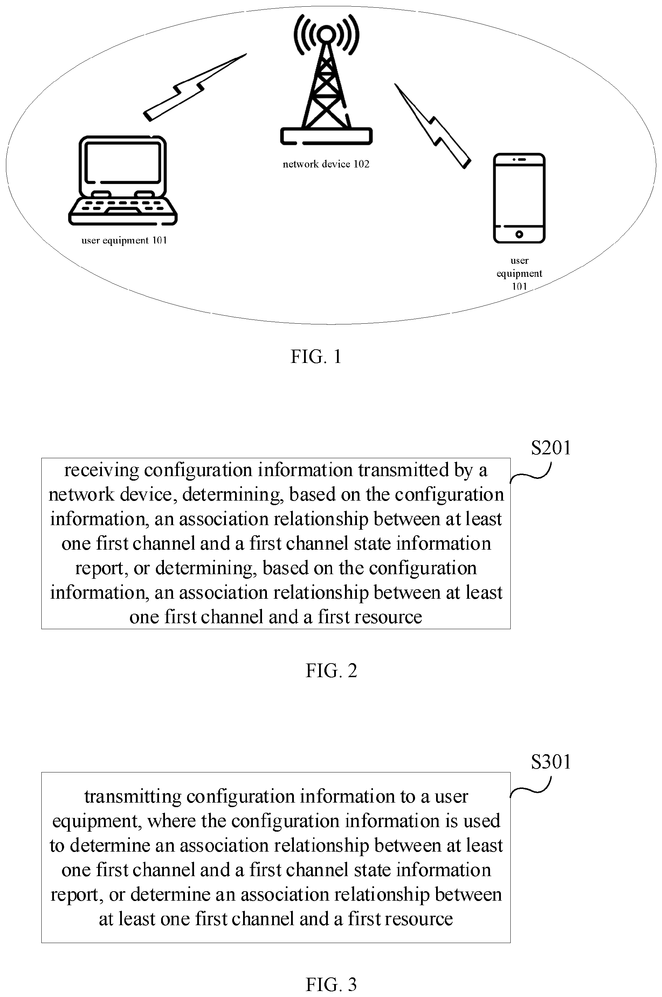

First, an application scenario according to an embodiment of the present disclosure is outlined with reference to FIG. 1. FIG. 1 is a schematic diagram illustrating an application scenario of an information configuration method according to one embodiment of the present disclosure. The technical solutions of the embodiments of the present application can be applied to various wireless communication systems, such as Global System for Mobile Communications (GSM) system, Code Division Multiple Access (CDMA) system, Wideband Code Division Multiple Access (WCDMA) system, General Packet Radio Service (GPRS), Long Term Evolution (LTE) system, Long Term Evolution-Advanced (LTE-A) system, New Radio (NR) system, evolution system of NR system, LTE-Unlicensed (LTE-U) system, NR-Unlicensed (NR-U) system, Non-Terrestrial Network (NTN) system, Universal Mobile Telecommunications System (UMTS), Wireless Local Area Network (WLAN) system, Wireless Fidelity (WiFi) system, fifth-generation communication (5G) system, or other communication systems, etc. It is easy to understand that the communication system architecture and service scenarios described in the embodiments of the present disclosure are intended to more clearly illustrate the technical solutions of the embodiments of the present disclosure, and do not constitute a limitation on the technical solutions provided by the embodiments of the present disclosure. Those of ordinary skill in the art can understand that, with the evolution of network architectures and the emergence of new service scenarios, the technical solutions provided by the embodiments of the present disclosure are equally applicable to similar technical problems.

As shown in FIG. 1, the application scenario at least includes: a terminal device 101 (e.g., UE 101) and a network device 102 (e.g., base station 102).

The terminal device may be User Equipment (UE), access terminal, subscriber unit, subscriber station, mobile station, mobile, remote station, remote terminal, mobile device, user terminal, smart terminal, wireless communication device, user agent, or user apparatus. The terminal may also be a cellular phone, cordless phone, Session Initiation Protocol (SIP) phone, Wireless Local Loop (WLL) station, Personal Digital Assistant (PDA), handheld device with wireless communication function, computing device or other processing device connected to a wireless modem, relay device, vehicle-mounted device, wearable device, terminal in a next-generation communication system such as an NR network, or terminal in a future evolved Public Land Mobile Network (PLMN), etc., without specific limitation.

The network device may be a device used for communicating with terminal devices. Specifically, the network device may be a Base Transceiver Station (BTS) in a GSM or CDMA communication system, a NodeB (NB) in a WCDMA communication system, an evolved NodeB (eNB or eNodeB) in an LTE communication system, a next generation evolved NodeB (ng-eNB) in an NR communication system, or a next generation NodeB (gNB) in an NR communication system.

In addition, the network device may also be an Access Point (AP) in a Wireless Local Area Network (WLAN), a relay station, a network device in a future evolved PLMN network, or a network device in an NTN network, etc. It is to be noted that in some network deployments, the network device may be an independent node to implement all functions of the above base station; it may include a Centralized Unit (CU) and a Distributed Unit (DU), such as gNB-CU and gNB-DU, and may further include an Active Antenna Unit (AAU). The CU may implement part of the functions of the network device, while the DU may implement other part of the functions of the network device. For example, the CU is responsible for processing non-real-time protocols and services, implementing functions of Radio Resource Control (RRC) layer, Service Data Adaptation Protocol (SDAP) layer, and Packet Data Convergence Protocol (PDCP) layer. The DU is responsible for processing physical layer protocols and real-time services, implementing functions of Radio Link Control (RLC) layer, Media Access Control (MAC) layer, and Physical (PHY) layer. In addition, the AAU implements part of the physical layer processing functions, radio frequency processing, and related functions of active antennas. Since RRC layer information will eventually become PHY layer information, or be transformed from PHY layer information, under this network deployment, higher-layer signaling (RRC) can be considered as transmitted by the DU, or transmitted by the DU and AAU. It can be understood that the network device may include at least one of a CU, a DU or an AAU.

In the example shown in FIG. 1, the beam management may at least include the following steps:
At step 1, the base station 102 transmits Channel State Information (CSI) configuration information to the UE 101, where the CSI configuration information may include two parts: CSI resource configuration (CSI-ResourceConfig) and CSI report configuration (CSI-ReportConfig). Specifically, CSI-ResourceConfig can be understood as being used to configure reference signals (CSI-RS) for calculating CSI, while CSI-ReportConfig can be understood as being used to configure behavior of reporting CSI (including but not limited to CSI report mode, CSI report triggering condition, CSI report reporting frequency, designated PUCCH, etc.).
At step 2, the UE 101 performs measurements according to the configured CSI-RS and calculates the required CSI.
At step 3, the UE 101 reports a CSI report to the base station 102 via a Physical Uplink Control Channel (PUCCH) in a format that meets the requirements of CSI-ReportConfig, for use by the base station 102 in beam management related work.

Specifically, for example, after receiving the CSI report, the base station 102 may transmit Downlink Control Information (DCI) to the UE 101, where the DCI includes Transmission Configuration Indicator state (TCI state) information. The TCI state information can be used to indicate how the UE 101 configures its own transmission parameters to communicate with the base station 102. After receiving the DCI, the UE 101 transmits a Hybrid Automatic Repeat request-Acknowledgement (HARQ-ACK) as acknowledgement of the received data. The base station delays a certain time based on this acknowledgement information, and then makes the TCI state effective within a subsequent period of time.

Further, PUCCH reporting can be divided into periodic CSI reporting, semi-persistent CSI reporting, and aperiodic CSI reporting.

The configuration method described in the embodiments of the present disclosure mainly involves CSI-ReportConfig in the above step 1 of the beam management and channel configuration information for PUCCH (PUCCH-Config). This will be described in detail hereinafter with reference to FIG. 2 to FIG. 3.

FIG. 2 is a flowchart of an information configuration method according to an embodiment of the present disclosure. The information configuration method according to the embodiment of the present disclosure shown in FIG. 2 is executed by, for example, the UE 101 described with reference to FIG. 1. The information configuration method at least may include the following steps.

At step S201, receiving configuration information transmitted by a network device, determining, based on the configuration information, an association relationship between at least one first channel and a first channel state information report, or determining, based on the configuration information, an association relationship between at least one first channel and a first resource.

As described above, the UE 101 receives configuration information transmitted by the base station 102. This configuration information may be CSI-ReportConfig information or PUCCH-Config information. The first channel state information report is feedback information about channel state transmitted by the UE 101 to the base station 102. The first channel is a channel for transmitting the first channel state information report. The first resource is a CSI resource configuration, or a CSI-RS resource set and/or synchronization signal block SSB resource set, or a CSI-RS resource and/or SSB resource, which is associated with the first channel. Specifically, reference is made to scheme 1 to scheme 3 for detailed description.

FIG. 3 is another flowchart of an information configuration method according to one embodiment of the present disclosure. The information configuration method according to the embodiment of the present disclosure shown in FIG. 3 is executed by, for example, the network device, i.e., the base station 102 described with reference to FIG. 1. The information configuration method at least may include the following steps.

In step S301, transmitting configuration information to a user equipment, where the configuration information is used to determine an association relationship between at least one first channel and a first channel state information report, or determine an association relationship between at least one first channel and a first resource. Specifically, reference is also made to scheme 1 to scheme 3 for detailed description.

### Scheme 1

The base station 102 associates at least 2 PUCCHs for each CSI report, where at least one PUCCH is used for periodic reporting, and at least one PUCCH is used for conditional triggered reporting.

Specifically, in CSI-ReportConfig information in Radio Resource Control (RRC) configuration, for each report configuration identifier (reportConfigId), it is necessary to configure at least two PUCCHs for each Carrier Bandwidth Part (BWP) to transmit CSI reports, thereby balancing trade-off between overhead and reporting timeliness. Details are as follows.

In one embodiment of the present disclosure, one CSI report may be associated with 2 PUCCHs including a first PUCCH and a second PUCCH.

The first PUCCH is only used for reporting a CSI report when the UE 101 determines that a first condition is satisfied. It is characterized in that the reporting period is short, thereby enabling fast reporting when the first condition is satisfied; and its payload size is small, thereby saving resource overhead.

The first condition may include at least one of the following:
1) channel quality of a CSI-RS or synchronization signal block SSB is less than a certain threshold (that is, the current signal quality is poor and cannot meet system performance requirements or needs of a specific application); or
2) channel quality of Quasi Co-Location (QCL) reference RS configured in TCI state is less than a certain threshold (that is, the channel quality is insufficiently accurate or unreliable); or
3) compared with the last L1-RSRP/L1-SINR report, the optional CRI/SSBID has changed.

When at least one of the above first conditions is satisfied, the UE 101 may perform reporting according to a configured report quantity; or report a first parameter for indicating no candidate RS; at this point, the base station 102 triggers an aperiodic CSI report. In addition, there may be 1 bit for indicating whether the reported content is used for beam reporting or beam switching.

The second PUCCH is used for the UE 101 to periodically or semi-persistently report CSI reports. It is characterized in that the reporting period is long, which can save reporting overhead; and its payload size is large, i.e., the amount of valid data carried in the report is large, which may include N CRIs and corresponding L1-RSRP/L1-SINR parameters, etc. Specifically, N may depend on network configuration.

In addition to configuring the reporting period and payload size of the first PUCCH and the second PUCCH, it is further necessary to configure the report quantity and the number of reported reference signals.

In one embodiment of the present disclosure, at least one report quantity and/or at least one number of reported reference signals are configured in one CSI report.

The report quantity (reportQuantity) refers to a parameter in the CSI report, including at least one or more of the following: TCI state ID, CRI, SSBID, L1-RSRP, L1-SINR, No Candidate RS.

The number of reported reference signals (nrofReportedRS) refers to the number of reference signals reported by the UE 101, which is a specific indicator. The UE 101 may selectively report a certain number of reference signals according to requirements and configuration of the base station 102, for the network to analyze and optimize. nrofReportedRS may be adjusted to meet the network's demand for channel state information.

Specifically, when one reportQuantity and one nrofReportedRS are configured, the first PUCCH and the second PUCCH adopt the same configuration.

Further, when one reportQuantity and one nrofReportedRS are configured and the first information indicating "joint reporting" is configured, the content reported by the first PUCCH and the second PUCCH together constitute the CSI report.

In an example of one embodiment of the present disclosure, when nrofReportedRS=4, the first PUCCH reports a first CRI/SSBID and L1-RSRP/L1-SINR, and the second PUCCH reports the remaining 3 CRIs/SSBIDs and L1-RSRP/L1-SINR.

When two reportQuantity and two nrofReportedRS are configured, the first reportQuantity and the first nrofReportedRS correspond to the first PUCCH, and the second reportQuantity and the second nrofReportedRS correspond to the second PUCCH. The reported content corresponding to the first reportQuantity is smaller than the reported content corresponding to the second reportQuantity, and/or the first nrofReportedRS is smaller than the second nrofReportedRS.

In an example of one embodiment of the present disclosure, the reporting content of the first PUCCH may be configured as:
reporting one CRI or reporting one SSBID; or
reporting one CRI+L1-RSRP/L1-SINR or reporting one SSBID+L1-RSRP/L1-SINR; or
reporting X CRIs+L1-RSRP/L1-SINR or reporting X SSBID+L1-RSRP/L1-SINR, where X depends on network configuration.

### Scheme 2

The base station 102 configures one PUCCH for conditional triggered reporting, and this PUCCH is associated with one CSI report.

Specifically, in PUCCH-Config information in Radio Resource Control (RRC) configuration, one PUCCH is associated with one reportConfigId, so that when the UE 101 determines that a first condition is satisfied, the UE 101 uses this PUCCH to report a CSI report corresponding to that reportConfigId. This specifically includes:
when there is only one periodic L1-RSRP or L1-SINR reporting on a BWP where the UE 101 operates, the above PUCCH is associated with a CSI report corresponding to the periodic L1-RSRP or L1-SINR reporting, and the corresponding CSI-RS or SSB resources;
when there are X periodic L1-RSRP or L1-SINR reporting on the BWP where the UE 101 operates, the above PUCCH is associated with a CSI report corresponding to one of the X periodic L1-RSRP or L1-SINR reports, and the corresponding CSI-RS or SSB resources.

The reporting content of the above PUCCH depends on network configuration, and may specifically include a third reportQuantity and a third nrofReportedRS. The third report quantity reportQuantity includes at least one or more of the following: TCI state ID, CRI, SSBID, L1-RSRP, L1-SINR, No Candidate RS.

The first condition is the same as that described in the scheme 1, and will not be repeated here.

### Scheme 3

The base station 102 configures one PUCCH for conditional triggered reporting, and this PUCCH is associated with a first resource.

Specifically, in PUCCH-Config information in Radio Resource Control (RRC) configuration, one PUCCH is associated with a first resource, so that when the UE 101 determines that a first condition is satisfied, the UE 101 measures L1-RSRP/L1-SINR based on the first resource associated with the PUCCH and performs reporting. Details are as follows.

As described above, the first resource is a CSI resource configuration associated with the PUCCH, or a CSI-RS resource set and/or SSB resource set, or a CSI-RS resource and/or SSB resource.

The reporting content of the above PUCCH depends on network configuration, and may specifically include a fourth reportQuantity and a fourth nrofReportedRS. The third report quantity reportQuantity includes at least one or more of the following: TCI state ID, CRI, SSBID, L1-RSRP, L1-SINR, No Candidate RS.

The first condition is the same as that described in the schemes 1 and 2, and will not be repeated here.

So far, the schemes 1 to 3 have been described.

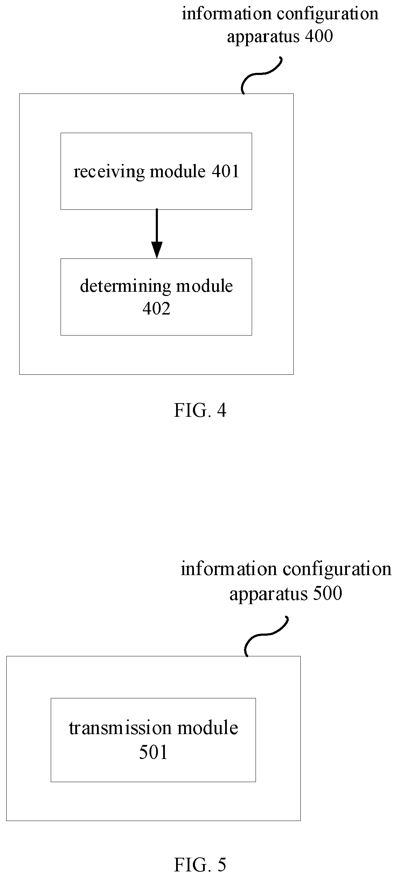

FIG. 4 is a schematic diagram of an information configuration apparatus according to one embodiment of the present disclosure. The information configuration apparatus 400 according to the embodiment of the present disclosure shown in FIG. 4 is applied by, for example, the terminal device UE 101 described with reference to FIG. 1. The information configuration apparatus 400 at least may include the following modules:
a receiving module 401 used to receive configuration information transmitted by a network device;
a determining module 402 used to determine, based on the configuration information, an association relationship between at least one first channel and a first channel state information report, or determine, based on the configuration information, an association relationship between at least one first channel and a first resource.

Specifically, when the configuration information is channel state information report configuration information, the channel state information report configuration information indicates a first channel and a second channel for transmitting a first channel state information report. The channel state information report configuration information further indicates at least one report quantity, and/or at least one number of reported reference signals. The first channel is associated with a first report quantity and a first number of reported reference signals, and the second channel is associated with a second report quantity and a second number of reported reference signals.

In case that the configuration information is first channel configuration information, the first channel configuration information indicates an association relationship between the first channel and the first channel state information report. The association relationship includes that the first channel is associated with a first channel state information report corresponding to at least one L1-RSRP or at least one L1-SINR report, or associated with a corresponding channel state information reference signal CSI-RS or synchronization signal block SSB resource. The first channel configuration information further indicates: a third report quantity and a third number of reported reference signals. The third report quantity includes at least one of the following: a transmission configuration indicator state identifier TCI state ID; and/or a reference signal resource indicator CRI; and/or a synchronization signal block identifier SSBID; and/or L1-RSRP or L1-SINR; or no Candidate RS.

In case that the configuration information is second channel configuration information, the second channel configuration information indicates an association relationship between the first channel and a first channel state information resource configuration, or a channel state information reference signal resource set, or an SSB set, or a channel state information reference signal resource, or an SSB. The second channel configuration information further indicates a fourth report quantity and a fourth number of reported reference signals. The fourth report quantity includes at least one of the following: a transmission configuration indicator state identifier TCI state ID; and/or a reference signal resource indicator CRI; and/or a synchronization signal block identifier SSBID; and/or L1-RSRP or L1-SINR; or no Candidate RS.

In addition, the apparatus may further include:
a reporting module 403 used to transmit, via the first channel, a first channel state information report to the network device when the channel state satisfies a first predetermined condition. The first predetermined condition includes at least one of the following: channel quality of a CSI-RS or SSB is less than a threshold value; or channel quality of a reference signal of a quasi co-location QCL configured in a TCI state is less than a threshold value; or an optional CRI or SSBID is different from a most recent report.

FIG. 5 is another schematic diagram of an information configuration apparatus according to one embodiment of the present disclosure. The information configuration apparatus 500 according to the embodiment of the present disclosure shown in FIG. 5 is applied by, for example, the network device, i.e., base station 102 described with reference to FIG. 1. The information configuration apparatus 500 at least may include the following modules.
a transmission module 501 used to transmit configuration information to a user equipment; where the configuration information is used to determine an association relationship between at least one first channel and a first channel state information report, or determine an association relationship between at least one first channel and a first resource.

Specifically, when the configuration information is channel state information report configuration information, the channel state information report configuration information indicates a first channel and a second channel for transmitting a first channel state information report. The channel state information report configuration information further indicates at least one report quantity, and/or at least one number of reported reference signals. The first channel is associated with a first report quantity and a first number of reported reference signals, and the second channel is associated with a second report quantity and a second number of reported reference signals.

In case that the configuration information is first channel configuration information, the first channel configuration information indicates an association relationship between the first channel and the first channel state information report. The association relationship includes that the first channel is associated with a first channel state information report corresponding to at least one L1-RSRP or at least one L1-SINR report, or associated with a corresponding channel state information reference signal CSI-RS or synchronization signal block SSB resource. The first channel configuration information further indicates: a third report quantity and a third number of reported reference signals. The third report quantity includes at least one of the following: a transmission configuration indicator state identifier TCI state ID; and/or a reference signal resource indicator CRI; and/or a synchronization signal block identifier SSBID; and/or L1-RSRP or L1-SINR; or no Candidate RS.

In case that the configuration information is second channel configuration information, the second channel configuration information indicates an association relationship between the first channel and a first channel state information resource configuration, or a channel state information reference signal resource set, or an SSB set, or a channel state information reference signal resource, or an SSB. The second channel configuration information further indicates a fourth report quantity and a fourth number of reported reference signals. The fourth report quantity includes at least one of the following: a transmission configuration indicator state identifier TCI state ID; and/or a reference signal resource indicator CRI; and/or a synchronization signal block identifier SSBID; and/or L1-RSRP or L1-SINR; or no Candidate RS.

In addition, the apparatus may further include:
a receiving module 502 used to receive, via the first channel, a first channel state information report transmitted by the user equipment when the channel state satisfies a first predetermined condition. The first predetermined condition includes at least one of the following: channel quality of a CSI-RS or SSB is less than a threshold value; or channel quality of a reference signal of a quasi co-location QCL configured in a TCI state is less than a threshold value; or an optional CRI or SSBID is different from a most recent report.

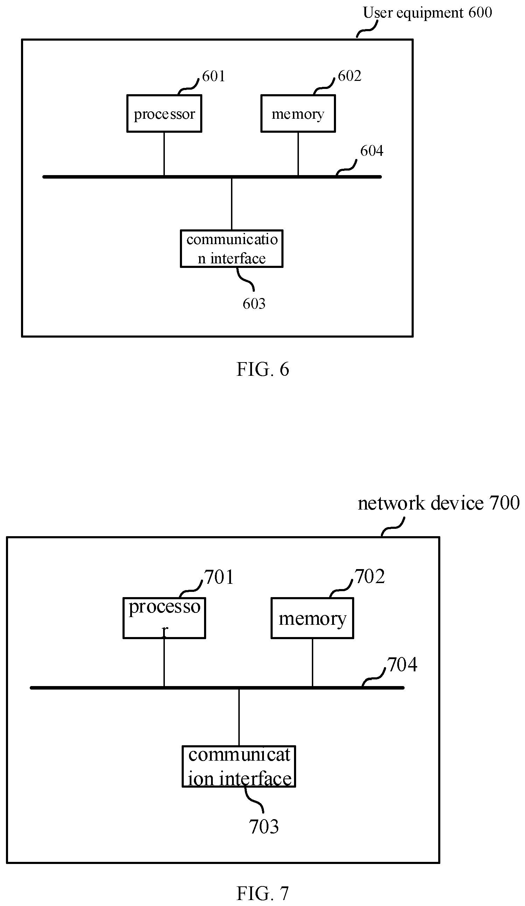

FIG. 6 is a hardware block diagram of a user equipment according to an embodiment of the present disclosure. A user equipment 600 includes a processor 601, a memory 602, and a communication interface 603. The processor 601, the memory 602, and the communication interface 603 are interconnected via a bus 604.

The communication interface 603 is used to perform wireless communication with a network device, and the communication interface 603 may be a communication chip.

The memory 602 is used to store a computer-readable instruction, and the memory 602 may be implemented by any type of volatile or non-volatile storage device or a combination thereof. The volatile memory may include, for example, Random Access Memory (RAM) and/or cache memory, etc. The non-volatile memory may include, for example, Read Only Memory (ROM), hard disk, flash memory, optical disc, magnetic disk, etc.

The processor 601 is used to execute the computer-readable instruction, to cause the user equipment 600 to perform the above information configuration method.

FIG. 7 is a hardware block diagram of a network device according to an embodiment of the present disclosure. A network device 700 includes a processor 701, a memory 702, and a communication interface 703. The processor 701, the memory 702, and the communication interface 703 are interconnected via a bus 704.

The communication interface 703 is used to perform wireless communication with a user equipment, and the communication interface 703 may be a communication chip.

The memory 702 is used to store a computer-readable instruction, and the memory 702 may be implemented by any type of volatile or non-volatile storage device or a combination thereof. The volatile memory may include, for example, Random Access Memory (RAM) and/or cache memory, etc. The non-volatile memory may include, for example, Read Only Memory (ROM), hard disk, flash memory, optical disc, magnetic disk, etc.

The processor 701 is used to execute the computer-readable instruction, to cause the network device 700 to perform the above information configuration method.

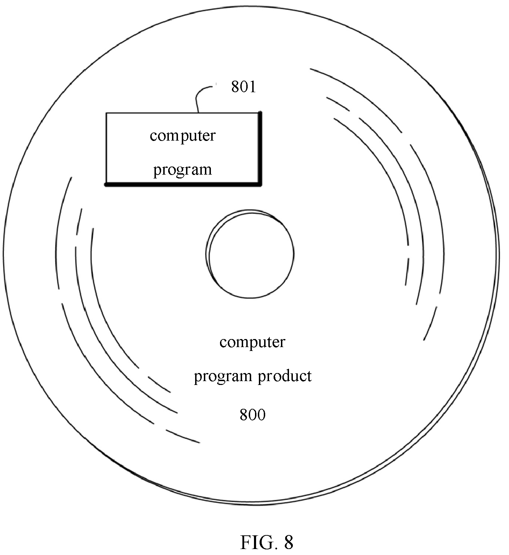

FIG. 8 is a schematic diagram of a computer program product according to one embodiment of the present disclosure. As shown in FIG. 8, a computer program product 800 according to one embodiment of the present disclosure includes a computer program 801 stored thereon. The computer program 801, when executed by a processor, performs the above information configuration method described with reference to the drawings. The computer program product includes but is not limited to, for example, volatile memory and/or non-volatile memory. The volatile memory may include, for example, Random Access Memory (RAM) and/or cache memory, etc. The non-volatile memory may include, for example, Read Only Memory (ROM), hard disk, flash memory, optical disc, magnetic disk, etc.

In the foregoing, the information configuration method, apparatus, user equipment and network device according to embodiments of the present disclosure have been described with reference to the accompanying drawings. According to the information configuration method of the embodiments of the present disclosure, by determining, based on configuration information, an association relationship between at least one channel and a channel state information report, or determining, based on configuration information, an association relationship between at least one channel and a resource, occupation of channel resources during beam management is effectively reduced.

Those of ordinary skill in the art can appreciate that units and algorithm steps of the examples described in conjunction with the embodiments disclosed herein can be implemented in electronic hardware, or a combination of computer software and electronic hardware. Whether these functions are performed in hardware or software depends on the specific application and design constraints of the technical solution. Professional technicians may use different methods to implement the described functions for each specific application, but such implementation should not be considered as departing from the scope of the present disclosure.

The basic principles of the present disclosure have been described above in conjunction with specific embodiments. However, it is to be pointed out that the advantages, benefits, effects, etc. mentioned in the present disclosure are merely examples and not limitations, and these advantages, benefits, effects, etc. should not be considered as essential to each embodiment of the present disclosure. In addition, the above specific details are only for the purpose of illustration and ease of understanding, and are not limiting. The above details do not limit the present disclosure to being necessarily implemented by using the above specific details.

The block diagrams of devices, apparatus, equipment, and systems involved in the present disclosure are merely illustrative examples and are not intended to require or imply that connections, arrangements, and configurations must be made in the manner shown in the block diagrams. As those skilled in the art will recognize, these devices, apparatus, equipment, and systems may be connected, arranged, and configured in any manner. Words such as "include", "comprise", "have", etc. are open-ended words meaning "including but not limited to" and may be used interchangeably. The words "or" and "and" as used herein refer to the phrase "and/or" and may be used interchangeably unless the context clearly indicates otherwise. The word "such as" as used herein refers to the phrase "such as but not limited to" and may be used interchangeably.

In addition, as used herein, "or" used in a list of items beginning with "at least one" indicates a disjunctive list such that, for example, a list of "at least one of A, B, or C" means A or B or C, or AB or AC or BC, or ABC (i.e., A and B and C). Further, the wording "exemplary" does not mean that the described example is preferred or better than other examples.

It is to be pointed out that in the system and method of the present disclosure, components or steps may be decomposed and/or recombined. These decompositions and/or re-combination should be regarded as equivalent solutions of the present disclosure.

Various changes, substitutions, and alterations to the techniques described herein may be made without departing from the technical teachings defined by the appended claims. Further, the scope of the claims of the present disclosure is not limited to the specific aspects of the processes, machines, manufactures, compositions of events, means, methods, and actions described above. Processes, machines, manufactures, compositions of events, means, methods, or actions currently existing or later developed that perform substantially the same function or achieve substantially the same result as the corresponding aspects described herein may be utilized. Accordingly, the appended claims include within their scope such processes, machines, manufactures, compositions of events, means, methods, or actions.

The above description of the disclosed aspects is provided to enable any person skilled in the art to make or use the present disclosure. Various modifications to these aspects will be readily apparent to those skilled in the art, and the general principles defined herein may be applied to other aspects without departing from the scope of the present disclosure. Therefore, the present disclosure is not intended to be limited to the aspects shown herein but is to be accorded the widest scope consistent with the principles and novel features disclosed herein.

The foregoing description has been presented for purposes of illustration and description. Moreover, this description is not intended to limit the embodiments of the present disclosure to the forms disclosed herein. Although multiple example aspects and embodiments have been discussed above, those skilled in the art will recognize certain variations, modifications, changes, additions, and sub-combinations thereof.

## Claims

1. An information configuration method, applied to a user equipment, comprising:
receiving configuration information transmitted by a network device; and
determining, based on the configuration information, an association relationship between at least one first channel and a first channel state information report; or determining, based on the configuration information, an association relationship between at least one first channel and a first resource.

2. The method according to claim 1, wherein the configuration information is channel state information report configuration information, and the channel state information report configuration information indicates the first channel and a second channel for transmitting the first channel state information report.

3. The method according to claim 2, wherein the channel state information report configuration information further indicates at least one report quantity, and/or at least one number of reported reference signals.

4. The method according to claim 3, wherein the first channel is associated with a first report quantity and a first number of reported reference signals, and the second channel is associated with a second report quantity and a second number of reported reference signals.

5. The method according to any one of claims 1 to 4, wherein the configuration information is first channel configuration information, and the first channel configuration information indicates an association relationship between the first channel and the first channel state information report.

6. The method according to claim 5, wherein the association relationship comprises that the first channel is associated with a first channel state information report corresponding to at least one L1-RSRP or at least one L1-SINR report, or associated with a corresponding channel state information reference signal CSI-RS or synchronization signal block SSB resource.

7. The method according to claim 5 or 6, wherein the first channel configuration information further indicates a third report quantity and a third number of reported reference signals.

8. The method according to claim 7, wherein the third report quantity comprises at least one of the following:
a transmission configuration indicator state identifier (TCI state ID);
and/or a reference signal resource indicator (CRI);
and/or a synchronization signal block identifier (SSBID);
and/or L1-RSRP or L1-SINR;
or no candidate RS.

9. The method according to any one of claims 1 to 4, wherein the configuration information is second channel configuration information, and the second channel configuration information indicates an association relationship between the first channel and a first channel state information resource configuration, or a channel state information reference signal resource set, or an SSB set, or a channel state information reference signal resource, or an SSB.

10. The method according to claim 9, wherein the second channel configuration information further indicates a fourth report quantity and a fourth number of reported reference signals.

11. The method according to claim 10, wherein the fourth report quantity comprises at least one of the following:
a transmission configuration indicator state identifier (TCI state ID);
and/or a reference signal resource indicator (CRI);
and/or a synchronization signal block identifier (SSBID);
and/or L1-RSRP or L1-SINR;
or no candidate RS.

12. The method according to any one of claims 1 to 11, wherein the method further comprises:
transmitting, via the first channel, the first channel state information report to the network device when the channel state satisfies a first predetermined condition.

13. The method according to claim 12, wherein the first predetermined condition comprises at least one of the following:
channel quality of a CSI-RS or SSB is less than a threshold value;
or channel quality of a reference signal of a quasi co-location (QCL) configured in a TCI state is less than a threshold value;
or an optional CRI or SSBID is different from a most recent report.

14. An information configuration method, applied to a network device, comprising:
transmitting configuration information to a user equipment; wherein the configuration information is used to determine an association relationship between at least one first channel and a first channel state information report, or determine an association relationship between at least one first channel and a first resource.

15. The method according to claim 14, wherein the configuration information is channel state information report configuration information, and the channel state information report configuration information indicates the first channel and a second channel for transmitting the first channel state information report.

16. The method according to claim 15, wherein the channel state information report configuration information further indicates at least one report quantity, and/or at least one number of reported reference signals.

17. The method according to claim 16, wherein the first channel is associated with a first report quantity and a first number of reported reference signals, and the second channel is associated with a second report quantity and a second number of reported reference signals.

18. The method according to any one of claims 14 to 17, wherein the configuration information is first channel configuration information, and the first channel configuration information indicates an association relationship between the first channel and the first channel state information report.

19. The method according to claim 18, wherein the association relationship comprises that the first channel is associated with a first channel state information report corresponding to at least one L1-RSRP or at least one L1-SINR report, or associated with a corresponding channel state information reference signal CSI-RS or synchronization signal block SSB resource.

20. The method according to claim 18 or 19, wherein the first channel configuration information further indicates a third report quantity and a third number of reported reference signals.

21. The method according to claim 20, wherein the third report quantity comprises at least one of the following:
a transmission configuration indicator state identifier (TCI state ID);
and/or a reference signal resource indicator (CRI);
and/or a synchronization signal block identifier (SSBID);
and/or L1-RSRP or L1-SINR;
or no candidate RS.

22. The method according to any one of claims 14 to 17, wherein the configuration information is second channel configuration information, and the second channel configuration information indicates an association relationship between the first channel and a first channel state information resource configuration, or a channel state information reference signal resource set, or an SSB set, or a channel state information reference signal resource, or an SSB.

23. The method according to claim 22, wherein the second channel configuration information further indicates a fourth report quantity and a fourth number of reported reference signals.

24. The method according to claim 23, wherein the fourth report quantity comprises at least one of the following:
a transmission configuration indicator state identifier (TCI state ID);
and/or a reference signal resource indicator (CRI);
and/or a synchronization signal block identifier (SSBID);
and/or L1-RSRP or L1-SINR;
or no candidate RS.

25. The method according to any one of claims 14 to 24, wherein the method further comprises:
receiving, via the first channel, the first channel state information report transmitted by the user equipment, when the channel state satisfies a first predetermined condition.

26. The method according to claim 25, wherein the first predetermined condition comprises at least one of the following:
channel quality of a CSI-RS or SSB is less than a threshold value;
or channel quality of a reference signal of a quasi co-location (QCL) configured in a TCI state is less than a threshold value;
or an optional CRI or SSBID is different from a most recent report.

27. An information configuration apparatus, applied to a user equipment, comprising:
a receiving module used to receive configuration information transmitted by a network device;
a determining module used to determine, based on the configuration information, an association relationship between at least one first channel and a first channel state information report, or determine, based on the configuration information, an association relationship between at least one first channel and a first resource.

28. An information configuration apparatus, applied to a network device, comprising:
a transmission module used to transmit configuration information to a user equipment; wherein the configuration information is used to determine an association relationship between at least one first channel and a first channel state information report, or the configuration information is used to determine an association relationship between at least one first channel and a first resource.

29. A user equipment, comprising:
a communication interface used to perform wireless communication with a network device;
a memory used to store a computer-readable instruction; and
a processor used to execute the computer-readable instruction to cause the user equipment to perform the information configuration method according to any one of claims 1 to 13.

30. A network device, comprising:
a communication interface used to perform wireless communication with a user equipment;
a memory used to store a computer-readable instruction; and
a processor used to execute the computer-readable instruction to cause the network device to perform the information configuration method according to any one of claims 14 to 26.

31. A computer program product, comprising: a computer program; wherein the computer program, when executed by a processor, performs the information configuration method according to any one of claims 1 to 26.

32. A computer storage medium, comprising: a computer program stored thereon; wherein the computer program, when executed by a processor, performs the information configuration method according to any one of claims 1 to 26.
